## Europäisches Patentamt

## European Patent Office

## Office européen des brevets

(11) Numéro de publication: **0 130 634**
**B1**

(12) **FASCICULE DE BREVET EUROPÉEN**

(45) Date de publication du fascicule du brevet:
**17.12.86**

(21) Numéro de dépôt: **84200790.8**

(22) Date de dépôt: **01.06.84**

(51) Int. Cl.⁴: **B 60 P 3/025**

(54) Véhicule tribune et/ou podium.

(30) Priorité: **03.06.83 BE 2060120**

(43) Date de publication de la demande:
**09.01.85 Bulletin 85/2**

(45) Mention de la délivrance du brevet:
**17.12.86 Bulletin 86/51**

(84) Etats contractants désignés:
**AT CH DE FR GB IT LI LU NL SE**

(56) Documents cité:
**CH-A-616 114**
**DE-U-1 894 564**
**DE-U-1 898 303**
**FR-A-2 486 572**
**GB-A-1 413 325**
**GB-A-1 603 613**
**US-A-4 232 488**

(73) Titulaire: **Jonckheere, Gilbert Robert, rue de Menin 408, B-7700 Mouscron (BE)**

(72) Inventeur: **Jonckheere, Gilbert Robert, rue de Menin 408, B-7700 Mouscron (BE)**

(74) Mandataire: **Donné, Eddy, M.F.J.Bockstael Arenbergstraat 13, B-2000 Anvers (BE)**

EP 0 130 634 B1

## Description

La présente invention concerne un véhicule transformable en tribune et/ou: podium, c'est-à-dire un véhicule conçu sous forme de remorque ou de semi-remorque, susceptible d'être transformé de manière fort simple et rapide, à l'endroit voulu, en une tribune ou un podium.

Ce système présente l'avantage de fournir une bonne place, en tout endroit choisi à volonté, à un nombre relativement important de personnes, sans qu'il ne faille avoir recours à des mesures spéciales, telles que la construction d'échafaudages ou autres.

Des véhicules transformables en tribune ou en salle itinérante sont connus du brevet CH-A-616 114. Néanmoins le système révélé par ce brevet présente l'inconvénient qu'il n'est pas convertible de tribune en podium et vice-versa, sans que cela requiert un travail important.

Afin de résoudre ce problème, l'invention concerne un véhicule-tribune, dont la tribune peur être aisément convertie en podium et vice-versa.

Le véhicule transformable en tribune et/ou podium selon l'invention, comportant un plancher susceptible d'être mis en place par pivotement et présentant plusieurs gradins y articulés, et dont la paroi postérieure, le toit et le plancher ne dépassent pas le gabarit routier du véhicule en leur forme repliée, est caractérisé en ce qu'il comporte un châssis portant une paroi postérieure télescopique susceptible d'être mise en place par coulissage et un toit susceptible d'être déployé; et en ce que ledits gradins permettent, à volonté, soit de disposer ce plancher en gradins, soit de le laisser plat.

Les caractéristiques et avantages de l'invention ressortiront plus clairement de la description détaillée suivante d'un mode de mise en oeuvre préféré d'un véhicule tribune ou podium du genre concerné, donnée sans la moindre intention restrictive avec référence aux dessins annexes, ou

la figure 1 représente de manière schématigue une vue en perspective d'un véhicule selon l'invention en position de roulement;

la figure 2 représente une vue analogue à celle de la figure 1 du véhicule en sa position de service;

la figure 3 représente une vue de l'arrière du véhicule selon les figures précédentes, regardé dans la direction indiquée par la flèche F3 de la figure 1;

les figures 4, 5, 6, 7 et 8 représentent des vues analogues à celle de la figure 3 de cinq positions relatives successives des parties du véhicule;

la figure 9 représente à plus grande échelle le détail indiqué par F9 dans la figure 4;

les figures 10 et 11 représentent à plus grande échelle les parties indiquées par F10 et F11 dans la figure 5;

les figures 12 et 13 représentent à plus grande échelle les détails indiqués par F12 et F13 dans la figure 6; et

la figure 14 représente à plus grande échelle le détail indiqué par F14 dans la figure 8.

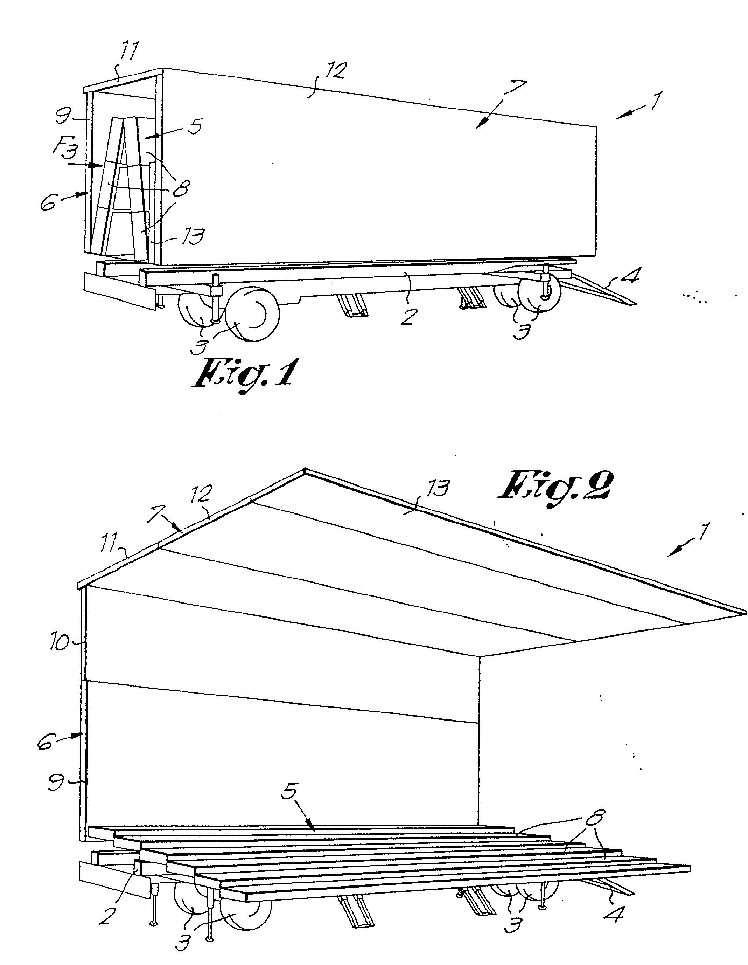

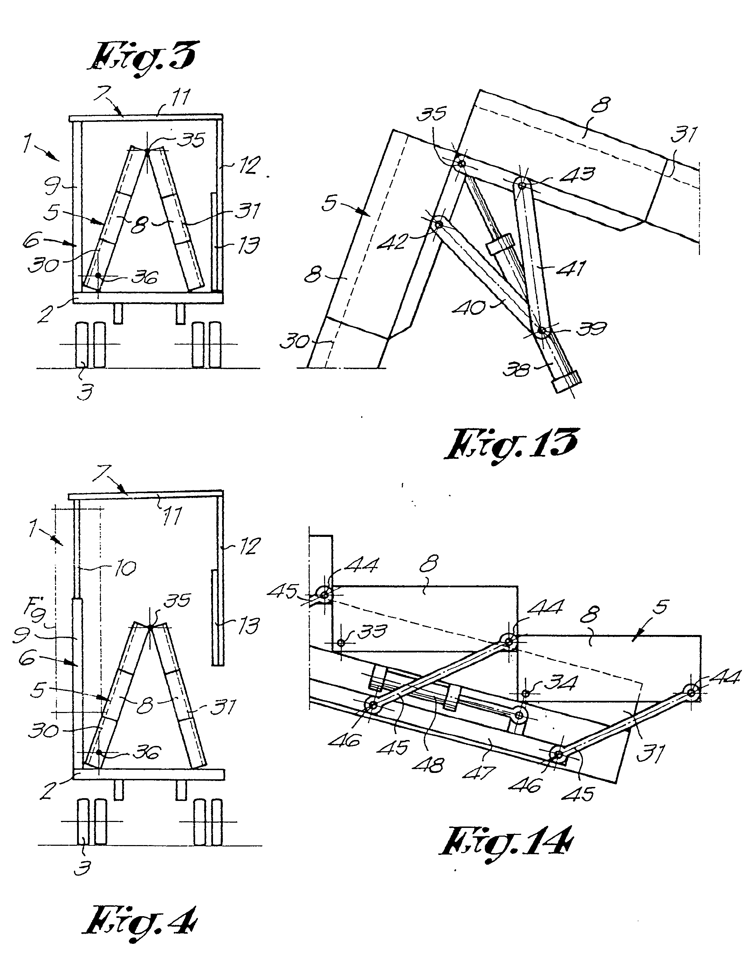

Les figures 1 et 2 représentent un véhicule tribune ou podium 1 comportant essentiellement un châssis 2, porté de manière connue par des roues 3 par l'entremise d'essieux et muni de moyens d'attelage 4 pour atteler le véhicule 1 par exemple à un tracteur.

Il va sans dire que lesdits moyens d'attelage 4 pourront être conçus pour l'accouplement du véhicule 1 exécuté soit sous forme de remorque, soit sous forme de semi-remorque.

Un mode de mise en oeuvre particulier de l'invention prévoit même la disposition directe du véhicule 1 sur le châssis 2 d'un camion proprement dit.

Le véhicule 1 selon le mode d'exécution ici décrit et représenté est un véhicule destiné à faire office de tribune, ce qui signifie que, lors de sa transformation en tribune, le plancher est disposé en gradins, comme il sera décrit ciaprès. Dans la description suivante il est donc uniquement question d'un véhicule tribune. En cas d'emploi du véhicule comme podium, le plancher n'est pas disposé en gradins et reste donc plat.

La tribune proprement dite sé compose, en l'occurrence, d'un plancher 5, d'une paroi posterieure 6 et d'un toit 7. Dans le présent mode d'exécution, le plancher 5 se compose de six éléments ou gradins 8, la paroi postérieure 6 se compose de deux parties principales 9 et 10 et le toit 7 se compose de trois parties principales 11, 12 et 13.

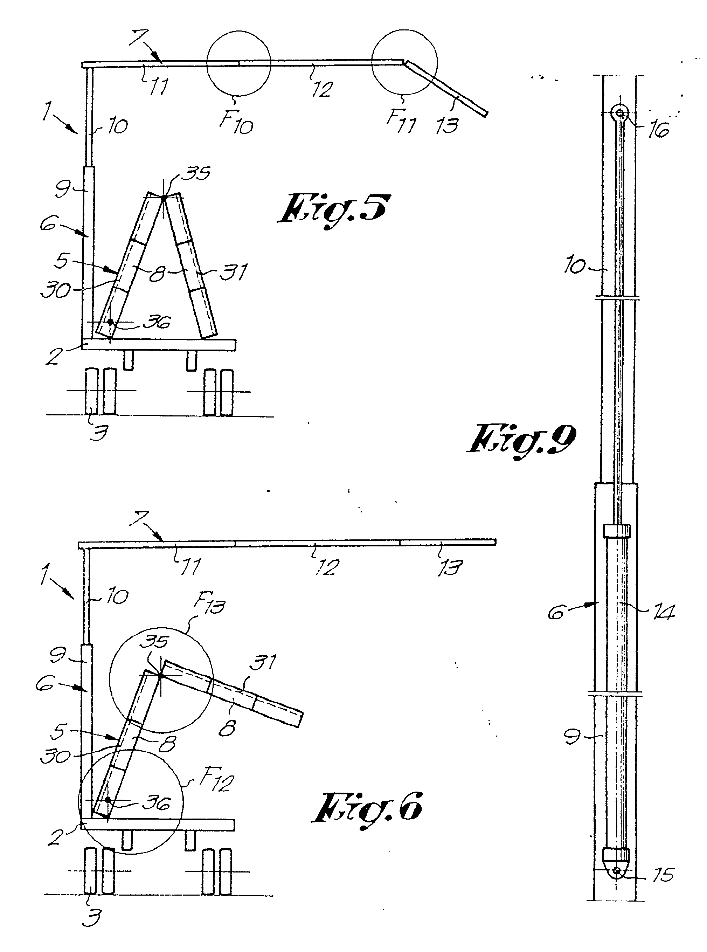

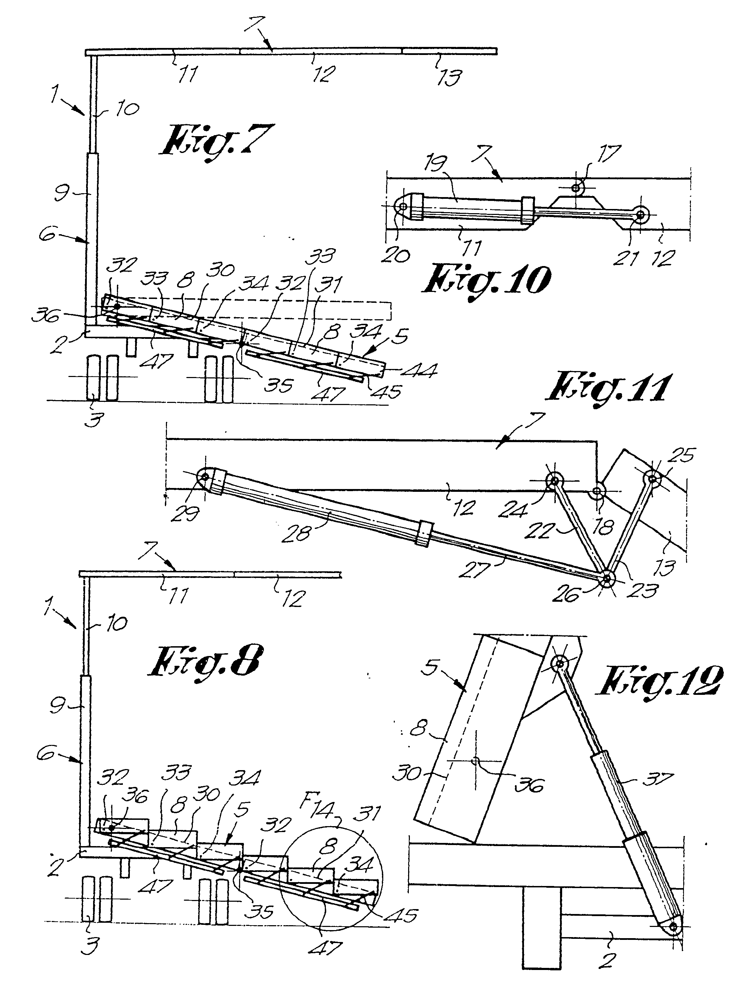

La partie inférieure 9 de la paroi postérieure 6, solidement fixée au châssis 2, est ún panneau creux, servant de logement pour le panneau supérieur 10, capable d'y coulisser librement sous la commande de cylindres hydrauliques 14 montés, comme le montre la figure 9, à l'intérieur des panneaux 9 et 10 à des distances appropriées et fixés, à l'une de leurs extrémités (15), au panneau 9 et, à l'autre extrémité (16), au panneau 10. Le panneau supérieur 10 peut ainsi être escamoté dans le panneau inférieur 9, lorsque le véhicule se trouve en sa position de roulement (figure 1) et en être retiré en vue du montage de la tribune (figures 2 et 4).

A l'extrémité libre du panneau 10 est solidement fixé le panneau 11 du toit 7, panneau 11 qui est articulé au moyen d'une charnière 17 au panneau de toit 12, articulé à son tour au moyen d'une charnière 18 au panneau de toit 13 (figures 10 et 11).

Entre les panneaux de toit 11 et 12 sont disposés, à des distances appropriées, des cylindres hydrauliques 19, articulés, d'une part (extrémité 20), au panneau 11 et, d'autre part (extrémité 21), au panneau 12.

On voit facilement que ce système se prête, de manière simple et efficace, à amener les panneaux 11 et 12 soit en la position représentée par la figure 4, soit en celle représentée par la figure 6.

Les panneaux de toit 12 et 13 sont mutuellement reliés par deux tringles 22 et 23, qui sont, à leur extrémité 24 ou 25, articulées respectivement au panneau 12 et au panneau 13 et sont, à leur autre extrémité 26, articulées l'une à l'autre. Au pivot d'articulation 26 est également articulée l'extrémité libre de la tige de piston 27 d'un cylindre hydraulique 28, qui, à son extrémité libre 29, est articulé au panneau 12.

Comme le montre la Figure 11, ce système se prête, de manière simple et efficace, à amener les panneaux 12 et 13 soit en la position illustrée par la figure 6, soit en une position dans laquelle ils sont décalés d'un angle de 180°, c'est-àdire placés l'un à côté de l'autre, comme le montre la figure 4.

Le plancher 5 de la tribune se compose principalement de deux séries de poutres 30 et 31 (figures 7 et 8), munies chacune de trois gradins 8, posés sur ces poutres 30 et 31 et y fixés au moyen de pivots d'articulation 32, 33 et 34.

Ces poutres 30 et 31 sont mutuellement articulées au moyen d'un axe 35 et les poutres 30 sont, à leur extrémité libre, en particulier au point 36, articulées au châssis 2 du véhicule.

Entre chaque poutre 30 et le châssis 2 sont également prévus des cylindres hydrauliques 37 servant à placer le plancher en l'une ou l'autre de plusieurs positions différentes, et entre les poutres 30 et 31, au point d'articulation 35, est monté un cylindre hydraulique 38, dont le corps est articulé au moyen d'un pivot 39 aux tringles 40 et 41, accouplées auxdites poutres 30 et 31 au moyen de pivots d'articulation 42 et 43. Ce système permet soit d'aligner mutuellement les poutres 30 et 31, soit de les disposer sous un certain angle mutuel, selon que le véhicule tribune se trouveen sa position de service ou en sa position de roulement.

Enfin, chaque gradin 8 est muni d'un pivot de rotation 44, portant une tringle 45, dont l'autre extrémité est articulée à une latte commune 47 par paire de poutres 30 et 31, qui est guidée par rapport à la poutre correspondante 30 ou 31 et est attaquée par un cylindre hydraulique 48, dont une des extrémités est fixée à une poutre 30 ou 31 et l'autre extrémité est articulée à la latte 47, de sorte que, si le plancher est mis dans la position représentée par la figure 7, les gradins 8 peuvent être mis en position horizontale par déplacement de la latte 47, de manière que le véhicule 1 peut faire office de podium.

On obtient ainsi un véhicule tribune ou podium, dont les dimensions correspondent à celles d'un camion routier ordinaire et qui peut être déplacé par roulement d'un point à l'autre, où l'installation de la tribune ou du podium s'effectue de manière simple et rapide par coulissage des panneaux postérieurs, déploiement des panneaux de toit et mise en position des gradins 8.

Il va de soi que la présente invention ne se limite aucunement à l'exemple de mise en oeuvre décrit dans les lignes précédentes et illustré par les dessins annexés, mais en prévoit toutes sortes de modifications, d'additions et d'adaptations en ce qui concerne ses formes et dimensions, évidemment à condition que ne soit pas dépassé son cadre défini par les revendications formulées ci-après.

## Revendications

1. Véhicule transformable en tribune et/ou podium, comportant un plancher (5) susceptible d'être mis en place par pivotement et présentant plusieurs gradins (8) y articulés, et dont la paroi postérieure (6), le toit (7) et le plancher (5) ne dépassent pas le gabarit routier du véhicule en leur forme repliée, caractérisé en ce qu'il comporte un châssis (2) portant une paroi postérieure téléscopique (6) susceptible d'être mise en place par coulissage et un toit (7) susceptible d être déployé; et en ce que ledits gradins (8) permettent, à volonté, soit de disposer ce plancher (5) en gradins, soit de le laisser plat.

2. Véhicule transformable en tribune et/ou podium selon la revendication 1, caractérisé en ce que ladite paroi postérieure téléscopique (6) se compose d'un panneau inférieur creux (9), solidement fixé sur le châssis (2) du véhicule, et d'un deuxième panneau (10) coulissant dans le panneau inférieur creux (9), au moins deux cylindres hydrauliques (14) étant prévus entre ces deux panneaux (9, 10).

3. Véhicule transformable en tribune et/ou podium selon la revendication 1. caractérisé en ce que ledit toit (7) susceptible d'être déployé se compose de trois panneaux (11, 12, 13) mutuellement articulés, dont le premier panneau (11) est solidement fixé à l'extrémité supérieure libre de ladite paroi postérieure (6).

4. Véhicule transformable en tribune et/ou podium selon la revendication 3, caractérisé en ce que la largeur du premier panneau (11) du toit est environ égale à la largeur du véhicule, respectivement du châssis (2), tandis que la largeur du deuxième panneau (12) est environ égale a la hauteur du panneau inférieur (9) de la paroi postérieure (6) et la largeur du troisième panneau (13) est plus petite que celle du panneau intermédiaire (12).

5. Véhicule transformable en tribune et/ou podium selon la revendication 3 ou 4, caractérisé en ce que le premier panneau (11) et le deuxième panneau (12) du toit sont, au niveau de leur articulation (17), réunis en plusieurs endroits par un dispositif d'accouplement supplémentaire se présentant sous forme d'un cylindre hydraulique (19).

6.- Véhicule transformable en tribune et/ou podium selon la revendication 3 ou 4, caractérisé en ce que le deuxième panneau (12) et le troisième panneau (13) du toit sont, au niveau de leur articulation (18), munis en plusieurs endroits d'une tringle (22,23), les extrémités libres de ces tringles étant articulées l'une à l'autre et à la tige de piston (27) d'un cylindre hydraulique (28) fixé au deuxième panneau.

7.- Véhicule transformable en tribune et/ou podium selon la revendication 1, caractérisé en ce que ledit plancher mis en place par pivotement (5) se compose essentiellement de deux parties principales mutuellement articulées, dont l'une est, à proximité de la paroi postérieure (6) du véhicule tribune, articulée au châssis (2), du véhicule.

8.- Véhicule transformable en tribune et/ou podium selon la revendication 7, caractérisé en ce qu'au niveau de l'articulation (36) entre une desdites parties principales du plancher et le châssis (2) du véhicule sont prévus, au moins deux cylindres hydrauliques (37) entre ce châssis (2) et cette partie principale du plancher.

9.- Véhicule transformable en tribune et/ou podium selon la revendication 7, caractérisé en ce que chacune desdites parties principales du plancher se compose essentiellement d'un châssis, ces deux châssis étant, au niveau de leur articulation commune, articulés en au moins deux points à l'extrémité libre de la tige de piston d'un cylindre hydraulique (38), dont le corps est articulé à deux tringles (40,41), dont l'autre extrémité de chacune d'elles est articulée à l'une desdites parties principales du plancher.

10.- Véhicule transformable en tribune et/ou podium selon l'une ou l'autre des revendications 7-9, caractérisé en ce que lesdits gradins (8) mutuellement articulés sont, à leur bord regardant la paroi postérieure (6) du véhicule, articulés à au moins deux traverses (30, 31) par partie principale.

11.- Véhicule transformable en tribune et/ou podium selon la revendication 10, caractérisé en ce que lesdits gradins (8) présentent un profil transversal rectangulaire et sont, à leur bord regardant la paroi postérieure de la tribune, fixés sur lesdites traverses (30,31).

12.- Véhicule transformable en tribune et/ou podium selon l'une ou l'autre des revendications 7-11, caractérisé en ce que chaque gradin (8) est, à son bord antérieur, en particulier à son bord antérieur inférieur, articulé à une tringle (45), dont l'autre extrémité, dirigée vers l'arrière, est articulée à une latte (47) commune pour tous les gradins (8) d'une desdites parties principales du plancher, latte (47) qui est attaquée par un cylindre hydraulique prévu entre elle et le châssis de la partie principale concernée.

13.- Véhicule transformable en tribune et/ou podium selon la revendication 12, caractérisé en ce que ladite latte (47) est guidée parallèlement au chassis de la partie principale concernée.

## Patentansprüche

1. In eine Tribüne bzw. in ein Podium verwandelbares Fahrzeug mit einem durch Schwenkung einstellbaren und mit mehreren an ihm angelenkten Stufen (8) ausgestatteten Fußboden (5), wobei dessen Hinterwand (6), Dach (7) und Fußboden (5) in zusammengeklappter Lage nicht aus dem Fahrzeugquerprofil herausragen, dadurch gekennzeichnet, daß es aus einem Rahmen (2) besteht, der mit einer zusammenschiebbaren und durch Schieben einstellbaren Hinterwand (6) und mit einem aufklappbaren Dach (7) versehen ist, und die Stufen (8) die beliebige Umwandlung des Fußbodens (5) in einen Stufenboden oder in einen Flachboden ermöglichen.

2. In eine Tribüne bzw. in ein Podium verwandelbares Fahrzeug gemäß dem Anspruch 1, dadurch gekennzeichnet, daß die vorgenannte zusammenschiebbare Hinterwand (6) aus einer ersten Platte in der Form einer kräftig am Rahmen (2) des Fahrzeuges befestigten unteren Hohlplatte (9) und einer in dieser unteren Hohlplatte (9) verschiebbaren zweiten Platte (10) besteht, wobei wenigstens zwei Hydraulikzylinder (14) zwischen diesen beiden Platten (9,10) angeordnet sind.

3. In eine Tribüne bzw. in ein Podium verwandelbares Fahrzeug gemäß dem Anspruch 1, dadurch gekennzeichnet, daß das vorgenannte aufklappbare Dach (7) aus drei aneinander angelenkten Platten (11,12,13) besteht, wobei die erste Platte (11) kräftig am freien oberen Ende der vorgenannten Hinterwand (6) befestigt ist.

4. In eine Tribüne bzw in ein Podium verwandelbares Fahrzeug gemäß dem Anspruch 3, dadurch gekennzeichnet, daß die Breite der ersten Dachplatte ungefähr der des Fahrzeuges bzw. des Rahmens (2) entspricht, während die Breite der zweiten Dachplatte (12) ungefähr der Höhe der unteren Platte (9) der Hinterwand (6) entspricht und die Breite der dritten Dachplatte (13) kleiner als die der Zwischenplatte (12) ist.

5. In eine Tribüne bzw. in ein Podium verwandelbares Fahrzeug gemäß dem Anspruch 3 oder 4, dadurch gekennzeichnet, daß die erste und die zweite Dachplatte (11 und 12) im Bereich ihres Gelenkes (17) in mehreren Punkten mittels einer Hilfskupplung in der Form eines Hydraulikzylinders (19) miteinander verbunden sind.

6. In eine Tribüne bzw. in ein Podium verwandelbares Fahrzeug gemäß dem Anspruch 3 oder 4, dadurch gekennzeichnet, daß die zweite und die dritte Dachplatte (12 und 13) im Bereich ihres Gelenkes (18) in mehreren Punkten je mit einer Stange (22,23) ausgestattet sind, wobei die freien Enden dieser Stangen aneinander angelenkt sind und gelenkig mit der Kolbenstange (27) eines an der zweiten Platte befestigten Hydraulikzylinders (28) verbunden sind.

7. In eine Tribüne bzw. in ein Podium verwandelbares Fahrzeug gemäß dem Anspruch 1, dadurch gekennzeichnet, daß der durch Schwenkung einstellbare Fußboden (5) im wesentlichen aus zwei aneinander angelenkten Hauptteilen besteht, wobei der eine Teil in der Nähe der Hinterwand (6) am Fahrzeugrahmen (2) angelenkt ist.

8. In eine Tribüne bzw. in ein Podium vewandelbares Fahrzeug gemäß dem Anspruch 7, dadurch gekennzeichnet, daß im Bereich des Gelenkes (36) zwischen einem der beiden vorgenannten Hauptteilen des Fußbodens einerseits und dem Fahrzeugrahmen (2) anderseits wenigstens zwei Hydraulikzylinder (37) zwischen diesem Rahmen (2) und diesem Hauptteil des Fußbodens angeordnet sind.

9. In eine Tribüne bzw. in ein Podium verwandelbares Fahrzeug gemäß dem Anspruch 7, dadurch gekennzeichnet, daß die beiden Hauptteile des Fußbodens (5) je im wesentlichen aus einem Rahmen bestehen, wobei die beiden Rahmen im Bereich ihres gemeinsamen Gelenkes in wenigstens zwei Punkten am freien Ende der Kolbenstange eines Hydraulikzylinders (38) angelenkt sind, wobei der Körper dieses Hydraulikzylinders (38) mit zwei an ihm angelenkten Stangen (40, 41) versehen ist, welche je mit ihrem anderen Ende an einem der beiden vorgenannten Hauptteile des Fußbodens (5) angelenkt sind.

10. In eine Tribüne bzw. in ein Podium verwandelbares Fahrzeug gemäß irgendeinem der vorhergehenden Ansprüche 7-9, dadurch gekennzeichnet, daß die vorgenannten, gelenkig miteinander verbundenen Stufen (8) an ihrer der Hinterwand (6) des Fahrzeuges zugekehrten Seite wenigstens an zwei Querbalken (30, 31) je Hauptteil angelenkt sind.

11. In eine Tribüne bzw. in ein Podium verwandelbares Fahrzeug gemäß dem Anspruch 10, dadurch gekennzeichnet, daß die vorgenannten Stufen (8) im Querschnitt rechteckig profiliert sind und an ihrer der Hinterwand der Tribüne zugekehrten Seite an den vorgenannten Querbalken (30, 31) befestigt sind.

12. In eine Tribüne bzw. in ein Podium verwandelbares Fahrzeug gemäß irgendeinem der vorhergehenden Ansprüche 7-11, dadurch gekennzeichnet, daß jede Stufe (8) an ihrer Vorderseite, und zwar insbesondere an ihrer unteren Vorderseite, an einer Stange (45) angelenkt ist, welche anderseits an ihrem rückwärtigen Ende an einer gemeinschaftlichen Latte (47) für sämtliche Stufen (8) eines der vorgenannten Hauptteile des Fußbodens angelenkt ist, wobei diese Latte (47) mittels eines zwischen ihr und dem Rahmen des betreffenden Hauptteiles angeordneten Hydraulikzylinders angetrieben wird.

13. In eine Tribüne bzw. in ein Podium verwandelbares Fahrzeug gemäß dem Anspruch 12, dadurch gekennzeichnet, daß die vorgenannte Latte (47) gleichlaufend mit dem Rahmen des betreffenden Hauptteiles geführt wird.

### Claims

1.- Vehicle transformable into a terrace and/or podium, comprising a floor (5) susceptible of being put into place by pivoting and showing a multiplicity of steps (8) articulated to same, and of which the hand partition wall (6), the roof (7) and the floor (5) are not going beyond the maximum road structure of the vehicle in their folded back form, characterized thereby that it comprises a frame (2) carrying a telescopic hind partition wall (6) susceptible of being put into place by sliding and a roof (7) susceptible of being unfolded; and that the aforesaid steps (8) allow, at will, to arrange the floor (5) in steps or leave it flat.

2.- Vehicle transformable into a terrace and/or podium according to claim 1, characterized thereby that the aforesaid telescopic hind partition wall (6) is composed of a hollow inferior panel (9), solidly fixed on the frame (2) of the vehicle, and of a second (10) sliding in the hollow inferior panel (9), at least two hydraulic cylinders (14) being provided for between those two panels (9, 10).

3.- Vehicle transformable into a terrace and/or podium according to claim 1, characterized thereby that the aforesaid roof (7) susceptible of being unfolded is composed of three panels (11, 12, 13) mutually articulated, the first panel (11) of which is solidly fixed to the free upper extremity of the aforesaid hind partition wall (6).

4.- Vehicle transformable into a terrace and/or podium according to claim 3, characterized thereby that the width of the first panel (11) of the roof is about equal to the width of the vehicle, respectively of the frame (2), whilst the width of the second panel (12) is nearly equal to the height of the inferior panel (9) of the hind partition wall (6) and the width of the third panel (13) is less than the one of the intermediate panel (12).

5.- Vehicle transformable into a terrace and/or podium according to claim 3 or 4, characterized thereby that the first panel (11) and the second panel (12) of the roof are, at the level of their articulation (17), assembled in many places by means of a supplementary coupling device showing itself in the form of a hydraulic cylinder (19).

6.- Vehicle transformable into a terrace and/or a podium according to claim 3 or 4, characterized thereby that the second panel (12) and the third panel (13) of the roof are each, at the level of their articulation (18), provided for in many places with a rod (22, 23), the free ends of these rods being articulated the one to the other and to the piston rod (27) of a hydraulic cylinder (28) fixed on the second panel.

7. Vehicle transformable into a terrace and/or podium according to claim 1, characterized thereby that the aforesaid floor put into place by pivoting (5) is essentially composed of two main parts mutually articulated, one of which, in the vicinity of the hind partition wall (6) is articulated to the frame (2) of the vehicle.

8.- Vehicle transformable into a terrace and/or podium according to claim 7, characterized thereby that at the level of the articulation (36), between one of the aforesaid main parts of the floor and the frame (2) of the vehicle, at least two hydraulic cylinders (37) are provided for between the frame (2) and this main part of the floor.

9.- Vehicle transformable into a terrace and/or a podium according to claim 7, characterized thereby that each of the aforesaid main parts of the floor is essentially composed of a frame, both these frames being, at the level of their common articulation, articulated in at least two points at the free extremity of the rod of a hydraulic cylinder (38), the body of which is articulated to two rods (40, 41), the other end of each of same is articulated to two rods (40, 41), the other end of each of same is articulated to one of the aforesaid main parts of the floor.

10.- Vehicle transformable into a terrace and/or a podium according to one or another of the claims 7-9, characterized thereby that the mutually articulated aforesaid steps (8) are, at their edge looking towards the hind partition wall (6) of the vehicle, articulated to at least two cross-bars (30, 31) per main part.

11.- Vehicle transformable into a terrace and/or a podium according to claims 10, characterized thereby that the aforesaid steps (8) show a rectangular transversal profile and are, at their edge looking towards the rear partition wall of the terrace fixed on the aforesaid cross-bars (30, 31).

12.- Vehicle transformable into a terrace and/or a podium according to one or another of the claims 7-11, characterized thereby that each step (8) is at its forward edge, in particular at its inferior forward edge, articulated to a rod (45), the other end of which oriented towards the rear is articulated to a lath (47) which is common to all the steps (8) of one of the aforesaid main parts of the floor, lath (47) which is attacked by a hydraulic cylinder provided for between same and the frame of the main part concerned.

13.- Vehicle transformable into a terrace and/or a podium according to claim 12, characterized thereby that the aforesaid lath (47) is guided in a direction which is parallel to the frame of the main part concerned.

**Fig. 1**

**Fig. 2**

1

**Fig. 3**

**Fig. 13**

**Fig. 4**

**Fig. 14**

Fig.5

Fig.6

Fig.9

Fig.7

Fig.10

Fig.11

Fig.8

Fig.12